# EUROPEAN PATENT APPLICATION

(11) **EP 4 744 910 A1**
(43) Date of publication of application: **20.05.2026**
(21) Application number: 25217074.1
(22) Date of filing: 19.11.2025
(51) Int. Cl.: B60C 11/03, B60C 11/12, B60C 11/13

(54) **SIPING PATTERN ON LOW-NOISE TREAD PATTERN FOR IMPROVING MEDIUM AND LONG-DISTANCE TRANSPORT MILEAGE, TREAD PATTERN, AND TIRE**

(30) Priority: 19.11.2024 CN 202411655642; 19.11.2024 CN 202422820526 U; 19.11.2024 CN 202422820524 U; 19.11.2024 CN 202411741991; 19.11.2024 CN 202422939810 U; 19.11.2024 CN 202422939809 U
(71) Applicant: Aeolus Tyre Co., Ltd., 454003 Jiaozuo Henan (CN)
(72) Inventor: WEI, Aiyun, JIAOZUO, HENAN, 454003 (CN); ZHANG, Lingxin, JIAOZUO, HENAN, 454003 (CN); MA, Xiangqian, JIAOZUO, HENAN, 454003 (CN); REN, Bingjie, JIAOZUO, HENAN, 454003 (CN); ZHANG, Dong, JIAOZUO, HENAN, 454003 (CN)
(74) Representative: Cabinet Beau de Loménie

(57) **Abstract**

Siping pattern on low-noise tread pattern for improving medium and long-distance transport mileage, tread pattern and tire, the tread pattern has long mileage life, and mainly improves mileage through the following aspects: (1) the medium and long-distance series of tread patterns typically have a saturation of around 78%, while the saturation of the tread pattern in the present application is close to 85%, being a high-saturation pattern; (2) the design form of the tread grooves in the present application enables the tire wear more uniform, further ensuring mileage of the tire. This tread pattern design allows the tire to avoid excessive heat generation at the shoulder and crown during medium and long-distance transportation, thereby reducing early damage.

## Description

### TECHNICAL FIELD

The present invention relates to steering tires of heavy-duty vehicles, and in particular to a siping pattern on a low-noise tread pattern for improving medium and long-distance transport mileage.

### BACKGROUND

The design form of the tread pattern has a significant impact on tire performance, which is an important link to ensure driving safety, and is a key design item in the development process of tire products.

With the changes of economic situation, European fleets are paying more attention to the transportation efficiency. To maximize profits, the fleets will inevitably require the tires to comply with the *Fair Packaging and Labeling Act* and to provide longer mileage; more demanding usage requirements will inevitably increase the shoulder-void ratio of the tread pattern. Low-flat tires can ensure a compartment height of approximately 3 meters under a height limit of 4 meters, thereby fully enhancing the transportation efficiency. Through product technological upgrades and research & development of high-end products, the market sales are driven by the overall consideration of tire performance such as noise, irregular wear resistance, wet grip, and rolling resistance, which presents both opportunities and challenges for our company.

The current status of the existing products in the prior art: the existing products have outdated tread patterns, gradually emerging performance defects, and label performance incapable of matching world-class brands, and thus, cannot capture high-end market shares.

To meet market demands, a low-noise tread pattern for improving medium and long-distance transport mileage has been developed. The tread pattern is configured to take overall consideration to tire performance such as noise, wet grip, and handling stability and is excellently cost-effective.

### SUMMARY

To solve the above problems, the present invention provides a siping pattern on a low-noise tread pattern for improving medium and long-distance transport mileage, a tread pattern, and tire. The siping pattern and tread pitch on the tread ribs are designed with an equal pitch, to improve the tire noise level.

The objective of the present invention is achieved in the following way:
A siping pattern on a low-noise tread pattern for improving medium and long-distance transport mileage, wherein the tread pattern comprises a tread groove and a tread rib that are disposed along a circumferential direction of a tire, the siping pattern is located on a tread rib provided with the tread grooves at both sides; the siping pattern is a first siping pattern comprising a first oblique sipe, a second oblique sipe, and a third oblique sipe; both ends of the first oblique sipe are respectively connected to the tread grooves at both sides of the tread rib thereof, one end of the second oblique sipe is communicated with the first oblique sipe, and the other end of the second oblique sipe is communicated with the third oblique sipe; one end of the third oblique sipe is communicated with the second oblique sipe, and the other end of the third oblique sipe is communicated with the tread groove on one side of the tread rib, and an included angle between the first oblique sipe /the third oblique sipe and a transverse direction of the tire tread pattern is 15-20°.

The tire comprises the tread pattern comprising the tread groove and the tread rib that are disposed along the circumferential direction of the tire, and the tread rib comprises a tire shoulder tread rib; the siping pattern is a tire shoulder siping pattern located on the tire shoulder tread rib; the tread groove adjacent to the tire shoulder tread rib is an edge tread groove; the tire shoulder siping pattern is a second siping pattern comprising a fourth oblique sipe, a fifth oblique sipe, a sixth oblique sipe, a seventh oblique sipe, and an eighth oblique sipe; the fourth oblique sipe, the fifth oblique sipe, and the sixth oblique sipe are communicated with the edge tread groove, respectively, one end of the seventh oblique sipe is communicated with one end of the fourth oblique sipe away from the edge tread groove, and the other end of the seventh oblique sipe is communicated with the fifth oblique sipe; one end of the eighth oblique sipe is communicated with one end of the sixth oblique sipe away from the edge tread groove, and the other end of the eighth oblique sipe is communicated with the fifth oblique sipe, the seventh oblique sipe and the eighth oblique sipe are intercommunicated at a portion communicated with the fifth oblique sipe.

A low-noise tread pattern for improving medium and long-distance transport mileage using the siping pattern, comprising the tread groove and the tread rib that are disposed along the circumferential direction of the tire, wherein in a width direction, a center of the tread pattern is a central tread groove; a first tread rib, a middle tread groove, a second tread rib, an edge tread groove, and a third tread rib are disposed from the central tread groove to both sides thereof, respectively, and the first tread rib and the second tread rib are provided with the first siping pattern, respectively; and
the first siping pattern comprises the first oblique sipe, the second oblique sipe, and the third oblique sipe, one end of the first oblique sipe is communicated with the central tread groove or the edge tread groove, and the other end of the first oblique sipe is communicated with the middle tread groove; one end of the second oblique sipe is communicated with the first oblique sipe, and the other end of the second oblique sipe is communicated with the third oblique sipe; one end of the third oblique sipe is communicated with the second oblique sipe, and the other end of the third oblique sipe is communicated with the middle tread groove, and the included angle between the first oblique sipe /the third oblique sipe and the transverse direction of the tire tread pattern is 15-20°.

The tread groove and the tread rib that are disposed along the circumferential direction of the tire, wherein in the width direction, the center of the tread pattern is the central tread groove; the first tread rib, the middle tread groove, the second tread rib, the edge tread groove, and the third tread rib are disposed from the central tread groove to both sides, respectively, and the first tread rib and the second tread rib are provided with the first siping pattern, respectively;
the first siping pattern comprises the first oblique sipe, the second oblique sipe, and the third oblique sipe, one end of the first oblique sipe is communicated with the central tread groove or the edge tread groove, and the other end of the first oblique sipe is communicated with the middle tread groove; one end of the second oblique sipe is communicated with the first oblique sipe, and the other end of the second oblique sipe is communicated with the third oblique sipe; one end of the third oblique sipe is communicated with the second oblique sipe, and the other end of the third oblique sipe is communicated with the middle tread groove; and
the third tread rib is provided with the second siping pattern comprising the fourth oblique sipe, the fifth oblique sipe, the sixth oblique sipe, the seventh oblique sipe, and the eighth oblique sipe; the fourth oblique sipe, the fifth oblique sipe, and the sixth oblique sipe are communicated with the edge tread groove, respectively, one end of the seventh oblique sipe is communicated with one end of the fourth oblique sipe away from the edge tread groove, and the other end of the seventh oblique sipe is communicated with the fifth oblique sipe; one end of the eighth oblique sipe is communicated with one end of the sixth oblique sipe away from the edge tread groove, and the other end of the eighth oblique sipe is communicated with the fifth oblique sipe, the seventh oblique sipe and the eighth oblique sipe are intercommunicated at the portion communicated with the fifth oblique sipe.

The tread pattern is designed in an equal-pitch or three-pitch way.

The middle tread groove is a zigzag pattern groove; one end of the first oblique sipe is communicated with the central tread groove or the edge tread groove, and the other end of the first oblique sipe is communicated with a bent portion of the middle tread groove; one end of the second oblique sipe is communicated with the first oblique sipe, and the other end of the second oblique sipe is communicated with the third oblique sipe; one end of the third oblique sipe is communicated with the second oblique sipe, and the other end of the third oblique sipe is communicated with a bent portion of the middle tread groove; and the first oblique sipe and the third oblique sipe are connected at two different bent portions of the middle tread groove.

The edge tread groove comprises a sub-groove, a second support tread rib, a first support tread rib, and a main tread groove that are disposed along a direction from the second tread rib to an adjacent third tread rib in sequence; an angle between a groove wall of the main tread groove and a normal direction of a tire tread surface at an upper end of the groove wall is 8°-11°; in a transverse cross-section, the first support tread rib and the second support tread rib are connected via an oblique line II that inclines outward towards the second support tread rib, and an angle between the oblique line II and a normal direction of a tire tread surface at an upper end of the oblique line II is 8°-11°; the main tread groove has a depth L1 of 14-16 mm; the first support tread rib has a width of 2-3 mm and a depth L2 of 10-13 mm; the second support tread rib has a width W3 of 6-8 mm and a depth L3 of 2-4 mm; the sub-groove has a depth L2 of 10-13 mm and a width W2 of 0.8-1.2 mm; and the edge tread groove has a width W1 of 15.5-17.5 mm.

Along the circumferential direction of the tire, a bottom portion of the central tread groove is in a left-right wavy shape; in a transverse cross-section, a groove wall of the central tread groove gradually inclines outward from bottom to top.

The middle tread groove is a zigzag pattern groove; in a transverse cross-sectional view of the middle tread groove, a bottom portion is designed as a "water drop" shape, the bottom portion of the middle tread groove is arc-shaped, with a maximum width ranging from 3.5 m to 4.3 mm; a groove wall of the middle tread groove, from above the arc-shaped bottom portion to the tire tread surface, comprises a vertical line and an outwardly inclined oblique line III in sequence, with a width between a vertical groove wall and an inclined groove wall ranging from 0.5 mm to 2.2 mm.

At least one bent portion of the middle tread groove is spaced between two bent portions of the middle tread groove that are connected to the first oblique sipe and the third oblique sipe;
the first siping pattern is disposed at an interval along the circumferential direction of the tire on the first tread rib and the second tread rib, respectively;
at least one bent portion of the middle tread groove is spaced between two adjacent first siping patterns on the first tread rib; and at least one bent portion of the middle tread groove is spaced between two adjacent first siping patterns on the second tread rib;
a width ratio of the first tread rib to the second tread rib is 0.9-1.1, and a width of the third tread rib is 1.8-2 times that of the first and second tread ribs;
a bottom portion of the sub-groove is designed in a "water drop" shape;
on a transverse cross-sectional view of the edge tread groove, a bottom portion of the main tread groove is designed with a full rounded corner, a side wall away from the first support tread rib forms an outwardly inclined oblique line I from bottom to top; the first support tread rib and the second support tread rib are connected by the oblique line II that inclines outward towards the second support tread rib; further, on the transverse cross-sectional view, the main tread groove is connected onto an upper surface of the first support tread rib by a rounded corner, and the first support tread rib is connected to the oblique line II by a rounded corner;
the central tread groove and the edge tread groove are linear tread grooves;
the tread pattern on a left side of a central axis is rotated 180° along a center to form a right-side pattern; and
a tire shoulder is overall designed with a closed shoulder; and a contour of the tire shoulder is designed with an arc.

The bent portion of the middle tread groove is spaced between the two bent portions of the middle tread groove that are connected to the first oblique sipe and the third oblique sipe of the same first siping pattern on the first tread rib, the spaced bent portion of the middle tread groove is communicated with the first oblique sipe on an adjacent second tread rib; further, a bent portion of the middle tread groove is spaced between two adjacent first siping patterns on the first tread rib, and a bent portion of the middle tread groove is spaced between two adjacent first siping patterns on the second tread rib; and
along the circumferential direction of the tire, a positional relationship of the first oblique sipe and the third oblique sipe of the same first siping pattern on the first tread rib and the adjacent second tread rib is opposite.

Along the circumferential direction of the tire, on a right side of the central tread groove, for the same first siping pattern on the first tread rib, the first oblique sipe is above the third oblique sipe; for the same first siping pattern on the adjacent second tread rib, the first oblique sipe is below the third oblique sipe;
the first oblique sipe and the third oblique sipe are disposed in parallel, and a length from a joint part between the first oblique sipe and the middle tread groove to a joint part between the second oblique sipe and the first oblique sipe is greater than a length of the third oblique sipe;and
the fourth oblique sipe, the fifth oblique sipe, and the sixth oblique sipe are disposed in parallel, and a length from a joint part between the fifth oblique sipe and the edge tread groove to a joint part between the fifth oblique sipe and the seventh oblique sipe is greater than a length of the fourth oblique sipe and is also greater than a length of the sixth oblique sipe.

The included angle between the first oblique sipe /the third oblique sipe and the transverse direction of the tire tread pattern is 15-20°; the first oblique sipe, the second oblique sipe, and the third oblique sipe are linear grooves having a bottom portion designed with a full rounded corner and a width ranging from 0.6 mm to 1 mm; the first oblique sipe and the second oblique sipe have a depth range of 2-4 mm, and the third oblique sipe has a depth range of 10-14 mm;
the fourth oblique sipe and the sixth oblique sipe have the same length; and
an included angle between the fourth/fifth/sixth oblique sipe and the transverse direction of the tire tread pattern is 15-20°, the fourth oblique sipe, the fifth oblique sipe, the sixth oblique sipe, the seventh oblique sipe, and the eighth oblique sipe are all linear grooves having a bottom portion designed with a full rounded corner, and a depth range of 1.5-2.5 mm.

A tire tread pattern is the tread pattern according to any one of claims 3-13.

Compared with the prior art, the present invention mainly improves the tire noise level through the siping patterns on the tread ribs. The tread patterns in the present application are designed with an equal pitch, or a three-variable pitch, which can significantly reduce noise. The tire's resistance to irregular wear is enhanced by designing the tread grooves and tire shoulder contour. The combination of linear and zigzag tread grooves improves the traction performance of the tire while ensuring the handling stability. In particular, the combination design of siping patterns and tread grooves on the tread ribs enhances the wet grip performance and improves the tire noise level, thereby improving the overall handling stability of the tire. Moreover, in the present application, the tread pitch is designed with an equal pitch, enabling the noise level to reach grade A.

To enable the tire to be used on medium and long-distance national highways, and to provide a low noise level and high mileage life, the present invention provides a low-noise tread pattern for improving medium and long-distance transport mileage. The tread pattern has long mileage life, and mainly improves mileage through the following aspects: (1) the medium and long-distance series of tread patterns typically have a saturation of around 78%, while the saturation of the tread pattern in the present application is close to 85%, being a high-saturation pattern; (2) the design form of the tread grooves in the present application enables the tire wear more uniform, further ensuring mileage of the tire. This tread pattern design allows the tire to avoid excessive heat generation at the shoulder and crown during medium and long-distance transportation, thereby reducing early damage. The tread pattern is designed to simultaneously consider its noise and wet grip performance, allowing the tread noise level to reach grade A and the wet grip performance to reach grade B. The optimized tread groove design, in combination with the crown contour design, can enhance the resistance to irregular wear and improve the handling stability of the tire.

### BRIEF DESCRIPTION OF DRAWINGS

FIG. 1 is a schematic diagram showing a spatial structure of a tread pattern according to the present invention;
FIG. 2 is a schematic diagram showing a plane structure of the tread pattern according to the present invention;
FIG. 3 is a schematic diagram showing a transverse cross-section structure of a crown of the tread pattern according to the present invention;
FIG. 4 is a schematic diagram showing a transverse cross-section structure of an edge tread groove;
FIG. 5 is a schematic diagram showing a transverse cross-section structure of a middle tread groove;
FIG. 6 is a schematic diagram showing a transverse cross-section structure of a first oblique sipe, a second oblique sipe, a third oblique sipe, a fourth oblique sipe, a fifth oblique sipe, a sixth oblique sipe, a seventh oblique sipe, or an eighth oblique sipe; and
FIG. 7 is a comparison diagram of noise levels according to the present invention;
first tread rib 1, second tread rib 2, third tread rib 3, central tread groove 4, middle tread groove 5, edge tread groove 6, main tread groove 61, first support tread rib 62, second support tread rib 63, sub-groove 64, oblique line I 65, oblique line II 66, first siping pattern 7, first oblique sipe 71, second oblique sipe 72, third oblique sipe 73, second siping pattern 8, fourth oblique sipe 81, fifth oblique sipe 82, sixth oblique sipe 83, seventh oblique sipe 84, and eighth oblique sipe 85.

### DETAILED DESCRIPTION OF EMBODIMENTS

While the present invention will be described in conjunction with detailed embodiments thereof, it is necessary to point out here that the embodiments are only used for the further explanation of the present invention, but are not construed as limiting the scope of protection of the present invention. Those skilled in the art could make some non-substantive improvements and adjustments according to the above-mentioned disclosure of the present invention.

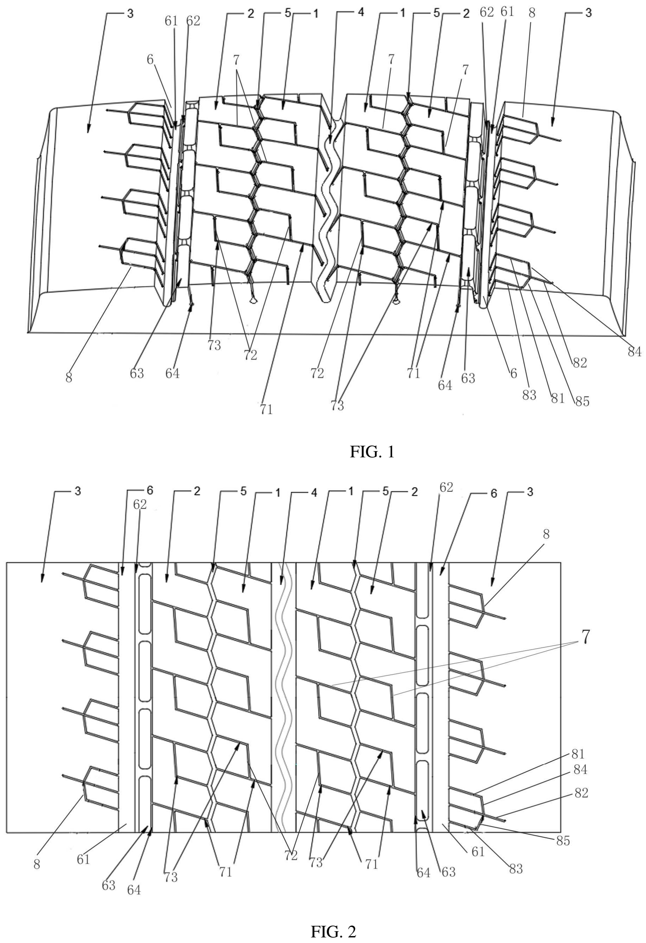

As shown in FIGS. 1-7, a low-noise tread pattern for improving medium and long-distance transport mileage includes a tread groove and a tread rib that are disposed along the circumferential direction of the tire. In the width direction, the center of the tread pattern is a central tread groove 4; the first tread rib 1, the middle tread groove 5, the second tread rib 2, the edge tread groove 6, and the third tread rib 3 are disposed from the central tread groove 4 to both sides, respectively, and the first tread rib 1 and the second tread rib 2 are provided with the first siping pattern 7, respectively; the third tread rib 3 is provided with a second siping pattern 8.

The first siping pattern 7 includes a first oblique sipe 71, a second oblique sipe 72, and a third oblique sipe 73, one end of the first oblique sipe 71 is communicated with the central tread groove 4 or the edge tread groove 6, and the other end of the first oblique sipe 71 is communicated with the middle tread groove 5; one end of the second oblique sipe 72 is communicated with the first oblique sipe 71, and the other end of the second oblique sipe 72 is communicated with the third oblique sipe 73; one end of the third oblique sipe 73 is communicated with the second oblique sipe 72, and the other end of the third oblique sipe 73 is communicated with the middle tread groove 5.

The middle tread groove 5 is a zigzag pattern groove; one end of the first oblique sipe 71 is communicated with the central tread groove 4 or the edge tread groove 6, and the other end of the first oblique sipe 71 is communicated with a bent portion of the middle tread groove 5; one end of the second oblique sipe 72 is communicated with the first oblique sipe 71, and the other end of the second oblique sipe 72 is communicated with the third oblique sipe 73; one end of the third oblique sipe 73 is communicated with the second oblique sipe 72, and the other end of the third oblique sipe 73 is communicated with a bent portion of the middle tread groove 5; and the first oblique sipe 71 and the third oblique sipe 73 are connected at two different bent portions of the middle tread groove. Further, the first oblique sipe 71 and the third oblique sipe 73 are not intersected.

At least one bent portion of the middle tread groove may be spaced between two bent portions of the middle tread groove connected to the first oblique sipe 71 and the third oblique sipe 73; and at least two bent portions of the middle tread groove may be spaced available.

The first siping pattern is disposed at an interval along the circumferential direction of the tire on the first tread rib 1 and the second tread rib 2, respectively.

On the first tread rib 1, two adjacent first siping patterns 7 may be separated by one bent portion of the middle tread groove 5, or may be separated by at least two bent portions of the middle tread groove. On the second tread rib 2, two adjacent first siping patterns 7 are separated by one bent portion of the middle tread groove 5, or may be separated by at least two bent portions of the middle tread groove.

The bent portion of the middle tread groove is spaced between the two bent portions of the middle tread groove that are connected to the first oblique sipe 71 and the third oblique sipe 73 of the same first siping pattern 7 on the first tread rib 1; the spaced bent portion of the middle tread groove is communicated with the first oblique sipe 71 on the adjacent second tread rib. Further, a bent portion of the middle tread groove 5 is spaced between two adjacent first siping patterns 7 on the first tread rib 1, and a bent portion of the middle tread groove 5 is spaced between two adjacent first siping patterns 7 on the second tread rib 2.

Additionally, along the circumferential direction of the tire, the positional relationship of the first oblique sipe and the third oblique sipe of the same first siping pattern on the first tread rib 1 and the adjacent second tread rib 2 is opposite.

As shown in FIG. 1, further, along the circumferential direction of the tire, on the right side of the central tread groove, for the same first siping pattern on the first tread rib, the first oblique sipe is above the third oblique sipe; for the same first siping pattern on the adjacent second tread rib, the first oblique sipe is below the third oblique sipe.

The first oblique sipe 71 and the third oblique sipe 73 are disposed in parallel, and a length from a joint part between the first oblique sipe 71 and the middle tread groove to a joint part between the second oblique sipe 72 and the first oblique sipe 71 is greater than a length of the third oblique sipe 73.

The third oblique sipe 73 is connected to a 1/3-2/3 position of the first tread rib or the second tread rib, preferably at the 1/2 position.

The included angle between the first oblique sipe 71/the third oblique sipe 73 and the transverse direction of the tire tread pattern is 15-20°; the first oblique sipe 71, the second oblique sipe 72, and the third oblique sipe 73 are linear grooves having a bottom portion designed with a full rounded corner and a width ranging from 0.6 mm to 1 mm; the first oblique sipe and the second oblique sipe have a depth range of 2-4 mm, and the third oblique sipe has a depth range of 10-14 mm.

The first siping pattern features an interval design of multiple steel sheet sipes, which ensures the wet grip performance and maintains the overall rigidity of the tread rib, achieving the "fragmented and rigid" goal. By simulation verification, the design of the steel sheet inclination angle in the first siping pattern of the present application is beneficial for the noise performance level. Additionally, such a configuration enables the overall tread pattern to have performance of aesthetic appeal, low noise, and high mileage.

The second siping pattern 8 includes a fourth oblique sipe 81, a fifth oblique sipe 82, a sixth oblique sipe 83, a seventh oblique sipe 84, and an eighth oblique sipe 85; the fourth oblique sipe 81, the fifth oblique sipe 82, and the sixth oblique sipe 83 are communicated with the edge tread groove 6, respectively, one end of the seventh oblique 84 is communicated with an end of the fourth oblique sipe 81 away from the edge tread groove 6, and the other end of the seventh oblique sipe 84 is communicated with the fifth oblique sipe 82. One end of the eighth oblique sipe 85 is communicated with an end of the sixth oblique sipe 83 away from the edge tread groove 6, and the other end of the eighth oblique sipe 85 is communicated with the fifth oblique sipe 82, the seventh oblique sipe 84 and the eighth oblique sipe 85 are intercommunicated at a portion communicated with the fifth oblique sipe 82. The connection point between the seventh oblique sipe 84 and the fifth oblique sipe 82 is not at the end portion of fifth oblique sipe 82.

The fourth oblique sipe 81, the fifth oblique sipe 82, and the sixth oblique sipe 83 are disposed in parallel, and a length from a joint part between the fifth oblique sipe 82 and the edge tread groove 6 to a joint part between the fifth oblique sipe 82 and the seventh oblique sipe 84 is greater than a length of the fourth oblique sipe 81 and is also greater than a length of the sixth oblique sipe 83.

The fourth oblique sipe 81 and the sixth oblique sipe 83 have the same length. The fifth oblique sipe 82 is connected to the 1/2-3/5 position of the width of third tread rib 3.

The cross-sectional shape of the second siping pattern is similar to a fork shape.

The design of the tire shoulder sipe has a great impact on tire noise, wet grip performance, and guiding performance. It is critical to meet customer's performance requirements through the design of the shoulder tread pattern.

The second tread sipe consists of the fourth oblique sipe 81, the fifth oblique sipe 82, the sixth oblique sipe 83, the seventh oblique sipe 84, and the eighth oblique sipe 85. The fourth oblique sipe 81, the fifth oblique sipe 82, and the sixth oblique sipe 83 are designed in parallel and form an included angle of 15°-20° with the horizontal axis. The included angle between the seventh oblique sipe 84 and the vertical direction ranges from 25°to -30°. The included angle between the eighth oblique sipe 85 and the vertical direction ranges from 5°to -10°. The overall width of the sipe design ranges from 0.6 mm to 1 mm. Design advantages: 1, noise reduction: (1) the shoulder design of the tread pattern adopts a closed shoulder design, effectively avoiding noise generated by the horn mouth effect when the tire contacts the road surface; (2) the included angle between most of the overall design of sipes and the horizontal axis ranges within 15°-20°. The fourth, fifth, and sixth oblique sipes 81, 82, and 83 of the second shoulder sipe maintain a consistent angle with the central rib sipe, reducing pumping noise; (3) the fourth oblique sipe 81 and seventh oblique sipe 84 are intercommunicated, and the sixth oblique sipe 83 and eighth oblique sipe 85 are intercommunicated, reducing the amplification phenomenon of the tread pattern. In addition, our simulation proof shows that the included angle between the shoulder pattern sipes and the horizontal axis within 15°-20° has little impact on the noise level. 2. Conducive to wet grip performance and the guiding performance of the tire.

The included angle between the fourth/fifth/sixth oblique sipe and the transverse direction of the tire tread pattern is 15-20°, the fourth oblique sipe, the fifth oblique sipe, the sixth oblique sipe, the seventh oblique sipe, and the eighth oblique sipe are all linear grooves having a bottom portion designed with a full rounded corner, and a depth range of 1.5-2.5 mm.

The design and ordered arrangement of the first siping patterns and the second siping patterns are beneficial to the wet grip performance and noise level of the tire. Additionally, the tread ribs are cut into multiple blocks by steel sheets to form the first siping patterns and the second siping patterns, and the saturation of the tread pattern is increased such that the pattern achieves fragmentation of the tread ribs without losing rigidity.

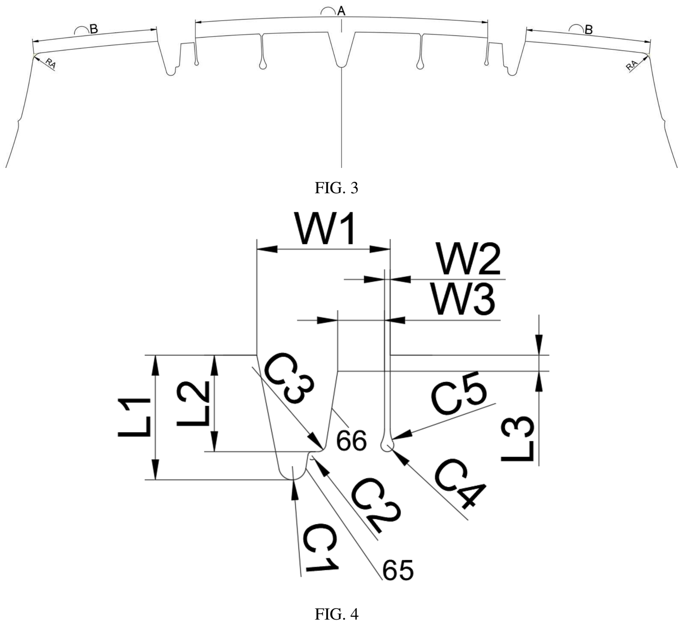

The edge tread groove 6 includes a sub-groove 64, a second support tread rib 63, a first support tread rib 62, and a main tread groove 61 that are disposed along a direction from the second tread rib 2 to an adjacent third tread rib 3 in sequence. As shown in FIG. 4, an angle between the groove wall of the main tread groove 61 and the normal direction of the tire tread surface at an upper end of the groove wall is 8°-11°. In the transverse cross-section, the first support tread rib 62 and the second support tread rib 63 are connected via an oblique line II 66 that inclines outward towards the second support tread rib 63, and the angle between the oblique line II 66 and the normal direction of the tire tread surface at the upper end of the oblique line II is 8°-11°.

Such a design of the edge tread groove prevents cracks at the bottom of the tread groove while increasing the stone removal capability of the tread groove. In addition, the design of the second support tread rib may effectively improve the eccentric wear resistance of the patterns, thereby increasing the mileage of the pattern.

In the transverse cross-section view of the edge tread groove, the bottom of the sub-groove 64 is designed as a "water drop" shape. The groove wall of the sub-groove 64 is a vertical structure from the bottom upward to the tread surface, which prevents stress concentration, causing steel sheet breakage. As shown in FIG. 4, the sub-groove 64 is designed with a full arc (denoted as C4), the groove wall is designed vertically, and the transition between the bottom and the groove wall of the auxiliary groove 64 is formed by an arc (denoted as C5).

In the transverse cross-section view of the edge tread groove, to prevent the cracking of the main tread groove, the bottom of the main tread groove 6 is designed with a full rounded corner (denoted as C1 in FIG. 4). The rounded corner/arc at the bottom of the main tread groove 6 connects to the side wall of the first support tread rib 62, thus forming an outwardly inclined oblique line I 65 from bottom to top. The first support tread rib 62 and the second support tread rib 63 are connected via an oblique line II 66 that inclines outward towards the second support tread rib (63). Moreover, in the transverse cross-section view, the main tread groove 61 is connected to the upper surface of the first support tread rib 62 by a rounded corner (denoted as C2). The first support tread rib 62 is connected to oblique line II 66 by a rounded corner (denoted as C3).

The depth L1 of the main tread groove 61 is 14-16 mm; the width of the first support tread rib 62 is 2-3 mm, and the depth L2 is 10-13 mm; the width W3 of the second support tread rib 63 is 6-8 mm, and the depth L3 is 2-4 mm; the depth L2 of the sub-groove 64 is 10-13 mm, and the width W2 is 0.8-1.2 mm; the width W1 of the edge tread groove 6 is 15.5-17.5 mm.

Along the circumferential direction of the tire, the upper surface of the second support tread rib 63 is provided with long elliptical blocks, and adjacent long elliptical blocks are connected by reinforcing ribs, which is designed for heat dissipation. The length of the long elliptical block is 1/2-3/4 of the pitch length.

The central tread groove 4 and the edge tread groove 6 are linear tread grooves.

Along the circumferential direction of the tire, the bottom portion of the central tread groove 4 is in a left-right wavy shape; in a transverse cross-section, the groove wall of the central tread groove 4 gradually inclines outward from bottom to top.

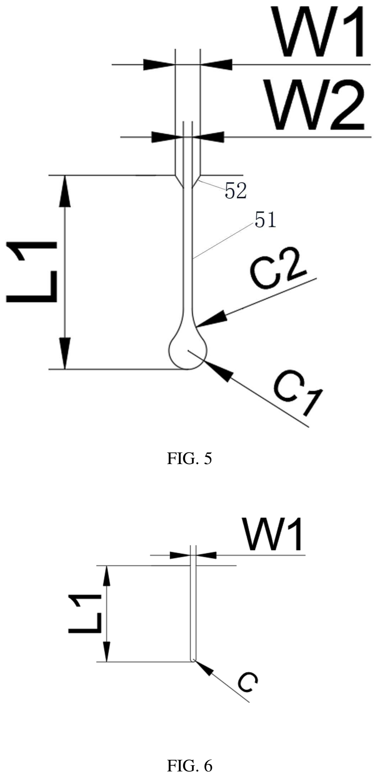

The middle tread groove is a zigzag pattern groove, which improves the traction performance of the tire and enhances the handling stability of the tire. As shown in FIG. 5, in the transverse cross-section view of the middle tread groove 5, the bottom is designed as a "water drop" shape, which increases the heat dissipation of the tread while ensuring the saturation of the pattern. The bottom of the middle tread groove is arc-shaped, and the range of the maximum width is 3.5-4.3 mm. The vertical line 51 and outwardly inclined oblique line III 52 are disposed above the arc-shaped bottom to the tread surface in sequence. This design enables that the steel sheets are connected more firmly during molding in a mold, and the width range between the vertical groove walls and the inclined groove walls is 0.5-2.2 mm.

The width ratio of the first tread rib to the second tread rib is 0.9-1.1. The width of the third tread rib 3 is 1.8-2 times that of the first tread rib and the second tread rib.

The tread pattern on a left side of a central axis is rotated 180°along a center to form a right-side pattern.

The tire shoulder adopts a closed shoulder design as a whole to reduce noise. The contour of the tire shoulder portion is designed with an arc. referring to the arc B. As shown in the transverse cross-section view of FIG. 3, the outer contour of the upper surface of the tire shoulder portion (i.e., the tread surface of the shoulder portion) is an arc surface, which is arc B in FIG. 3. The outer contour of the upper surface at the crown position is arc A, and arc B is tangent to arc A. In the prior art, the shoulder position is usually designed as a straight line, tangent or intersecting with arc A. Therefore, the design of the present application improves the eccentric wear resistance of the tire. Additionally, an arc design is adopted at the intersection of the crown and the side wall. RA as shown in FIG. 3 reduces stress at the edges of the pattern blocks and increases the service life of the tire.

As shown in the transverse cross-section view of FIG. 3, the outer contour of the upper surface of the tire shoulder portion (i.e., the shoulder tread surface) is arc B, and the outer contour of the upper surface at the crown position (i.e., the crown tread surface) is arc A. Arc B is tangent to arc A. In the prior art, the shoulder position is usually designed as a straight line, tangent or intersecting with arc A. Therefore, the design of the present application improves the eccentric wear resistance of the tire. Moreover, the outer contour of the upper surface of the tire shoulder portion (i.e., the shoulder tread surface) is designed with an arc, which reduces stress at the edges of the pattern blocks and increases the service life of the tire. By emulation verification, the tire designed in the present application has more uniform grounding property.

The saturation of the tread pattern approaches 85%. The first siping pattern is disposed on the tread ribs 1 and 2, which improves the overall rigidity of the tread ribs and ensures product mileage.

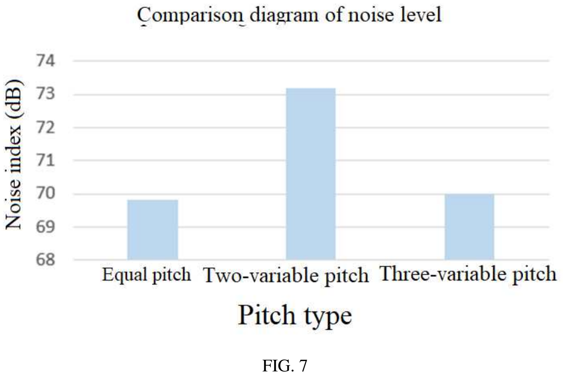

The present invention mainly improves the tire noise level through the siping patterns on the tread ribs. The tread patterns in the present application are designed with an equal pitch, or a three-variable pitch, which can significantly reduce noise. The tire's resistance to irregular wear is enhanced by designing the tread grooves and tire shoulder contour. The combination of linear and zigzag tread grooves improves the traction performance of the tire while ensuring the handling stability, in particular, the combination design of siping patterns and tread grooves on the tread ribs, which enhances the wet grip performance and improves the tire noise level, thereby improving the overall handling stability of the tire. Additionally, as shown in FIG. 7, the tread patterns in the present application are designed with an equal pitch, or a three-variable pitch, which may significantly reduce noise. In particular, in the present application, the tread pitch is designed with an equal pitch, with the number of pitches ranging from 94 to 100, so that the noise level reaches grade A.

To enable the tire to be used on medium and long-distance national highways, and to provide a low noise level and high mileage life, the present invention provides a low-noise tread pattern for improving medium and long-distance transport mileage. The tread pattern has long mileage life. This tread pattern design allows the tire to avoid excessive heat generation at the shoulder and crown during medium and long-distance transportation, thereby reducing early damage. The tread pattern is designed to simultaneously consider its noise and wet grip performance, allowing the tread noise level to reach grade A and the wet grip performance to reach grade B. The optimized tread groove design, in combination with the crown contour design, can enhance the resistance to irregular wear and improve the handling stability of the tire.

What is described above are merely the preferred embodiments of the present invention, but the scope of protection of the present invention is not limited thereto. It should be pointed out that those skilled in the art and familiar with the art, could make equivalent substitutions or changes according to the technical solutions and the inventive concept of the present invention without departing from the overall concept of the present invention. Moreover, these shall be deemed to fall within the scope of protection of the present invention.

## Claims

1. A tire with a low-noise tread pattern for improving medium and long-distance transport mileage, wherein the tread pattern comprises tread grooves and at least one tread rib that are disposed along a circumferential direction of the tire, and a first siping pattern (7) located on a tread rib of the tread pattern provided between two tread grooves ; the first siping pattern (7) comprising a first oblique sipe (71), a second oblique sipe (72), and a third oblique sipe (73); both ends of the first oblique sipe (71) are respectively connected to the tread grooves at both sides of the tread rib thereof, one end of the second oblique sipe (72) is communicated with the first oblique sipe (71), and the other end of the second oblique sipe (72) is communicated with the third oblique sipe (73); one end of the third oblique sipe (73) is communicated with the second oblique sipe (72), and the other end of the third oblique sipe (73) is communicated with the tread groove on one side of the tread rib, and an included angle between the first oblique sipe (71)/the third oblique sipe (73) and a transverse direction of the tire tread pattern is 15-20°.

2. The tire according to claim 1, and the tread pattern comprises a tire shoulder tread rib and an edge tread groove (6) adjacent to the tire shoulder tread rib; is the tire further comprising a second siping pattern (8) located on the tire shoulder tread rib and comprising a fourth oblique sipe (81), a fifth oblique sipe (82), a sixth oblique sipe (83), a seventh oblique sipe (84), and an eighth oblique sipe (85); the fourth oblique sipe (81), the fifth oblique sipe (82), and the sixth oblique sipe (83) are communicated with the edge tread groove (6), respectively, one end of the seventh oblique sipe (84) is communicated with one end of the fourth oblique sipe (81) away from the edge tread groove (6), and the other end of the seventh oblique sipe (84) is communicated with the fifth oblique sipe (82); one end of the eighth oblique sipe (85) is communicated with one end of the sixth oblique sipe (83) away from the edge tread groove (6), and the other end of the eighth oblique sipe (85) is communicated with the fifth oblique sipe (82), the seventh oblique sipe (84) and the eighth oblique sipe (85) are intercommunicated at a portion communicated with the fifth oblique sipe (82).

3. The tire according to any one of claims 1-2, wherein in a width direction, a center of the tread pattern is a central tread groove (4); a first tread rib (1), a middle tread groove (5), a second tread rib (2), an edge tread groove (6), and a third tread rib (3) are disposed from the central tread groove (4) to both sides thereof, respectively, and the first tread rib (1) and the second tread rib (2) are provided with the first siping pattern (7), respectively; and
one end of the first oblique sipe (71) is communicated with the central tread groove (4) or the edge tread groove (6), and the other end of the first oblique sipe (71) is communicated with the middle tread groove (5); one end of the second oblique sipe (72) is communicated with the first oblique sipe (71), and the other end of the second oblique sipe (72) is communicated with the third oblique sipe (73); one end of the third oblique sipe (73) is communicated with the second oblique sipe (72), and the other end of the third oblique sipe (73) is communicated with the middle tread groove (5).

4. The tire according to claim 3, wherein
the third tread rib (3) is provided with the second siping pattern (8); the fourth oblique sipe (81), the fifth oblique sipe (82), and the sixth oblique sipe (83) are communicated with the edge tread groove (6), respectively, one end of the seventh oblique sipe (84) is communicated with one end of the fourth oblique sipe (81) away from the edge tread groove (6), and the other end of the seventh oblique sipe (84) is communicated with the fifth oblique sipe (82); one end of the eighth oblique sipe (85) is communicated with one end of the sixth oblique sipe (83) away from the edge tread groove (6), and the other end of the eighth oblique sipe (85) is communicated with the fifth oblique sipe (82), the seventh oblique sipe (84) and the eighth oblique sipe (85) are intercommunicated at the portion communicated with the fifth oblique sipe (82).

5. The tire according to claim 3 or 4, wherein the tread pattern is designed in an equal-pitch or three-pitch way.

6. The tire according to claim 3 or 4, wherein the middle tread groove (5) is a zigzag pattern groove; one end of the first oblique sipe (71) is communicated with the central tread groove (4) or the edge tread groove (6), and the other end of the first oblique sipe (71) is communicated with a bent portion of the middle tread groove (5); one end of the second oblique sipe (72) is communicated with the first oblique sipe (71), and the other end of the second oblique sipe (72) is communicated with the third oblique sipe (73); one end of the third oblique sipe (73) is communicated with the second oblique sipe (72), and the other end of the third oblique sipe (73) is communicated with a bent portion of the middle tread groove (5); and the first oblique sipe (71) and the third oblique sipe (73) are connected at two different bent portions of the middle tread groove.

7. The tire according to claim 6, wherein the edge tread groove (6) comprises a sub-groove (64), a second support tread rib (63), a first support tread rib (62), and a main tread groove (61) that are disposed along a direction from the second tread rib (2) to an adjacent third tread rib (3) in sequence; an angle between a groove wall of the main tread groove (61) and a normal direction of a tire tread surface at an upper end of the groove wall is 8°-11°; in a transverse cross-section, the first support tread rib (62) and the second support tread rib (63) are connected via an oblique line II (66) that inclines outward towards the second support tread rib (63), and an angle between the oblique line II (66) and a normal direction of a tire tread surface at an upper end of the oblique line II is 8°-11°; the main tread groove (61) has a depth L1 of 14-16 mm; the first support tread rib (62) has a width of 2-3 mm and a depth L2 of 10-13 mm; the second support tread rib (63) has a width W3 of 6-8 mm and a depth L3 of 2-4 mm; the sub-groove (64) has a depth L2 of 10-13 mm and a width W2 of 0.8-1.2 mm; and the edge tread groove (6) has a width W1 of 15.5-17.5 mm.

8. The tire according to claim 6, wherein along the circumferential direction of the tire, a bottom portion of the central tread groove (4) is in a left-right wavy shape; in a transverse cross-section, a groove wall of the central tread groove (4) gradually inclines outward from bottom to top.

9. The tire according to claim 6, wherein, in a transverse cross-sectional view of the middle tread groove (5), a bottom portion is designed as a "water drop" shape, the bottom portion of the middle tread groove is arc-shaped, with a maximum width ranging from 3.5 m to 4.3 mm; a groove wall of the middle tread groove (5), from above the arc-shaped bottom portion to the tire tread surface, comprises a vertical line and an outwardly inclined oblique line III in sequence, with a width between a vertical groove wall and an inclined groove wall ranging from 0.5 mm to 2.2 mm.

10. The tire according to claim 6, wherein
at least one bent portion of the middle tread groove is spaced between two bent portions of the middle tread groove that are connected to the first oblique sipe (71) and the third oblique sipe (73);
the first siping pattern is disposed at an interval along the circumferential direction of the tire on the first tread rib (1) and the second tread rib (2), respectively;
at least one bent portion of the middle tread groove (5) is spaced between two adjacent first siping patterns (7) on the first tread rib (1); and at least one bent portion of the middle tread groove (5) is spaced between two adjacent first siping patterns (7) on the second tread rib (2);
a width ratio of the first tread rib (1) to the second tread rib (2) is 0.9-1.1, and a width of the third tread rib (3) is 1.8-2 times that of the first and second tread ribs;
a bottom portion of the sub-groove (64) is designed in a "water drop" shape;
on a transverse cross-sectional view of the edge tread groove, a bottom portion of the main tread groove (61) is designed with a full rounded corner, a side wall away from the first support tread rib (62) forms an outwardly inclined oblique line I (65) from bottom to top; the first support tread rib (62) and the second support tread rib (63) are connected by the oblique line II (66) that inclines outward towards the second support tread rib (63); further, on the transverse cross-sectional view, the main tread groove (61) is connected onto an upper surface of the first support tread rib (62) by a rounded corner, and the first support tread rib (62) is connected to the oblique line II (66) by a rounded corner;
the central tread groove (4) and the edge tread groove (6) are linear tread grooves;
the tread pattern on a left side of a central axis is rotated 180° along a center to form a right-side pattern; and
a tire shoulder is overall designed with a closed shoulder; and a contour of the tire shoulder is designed with an arc.

11. The tire according to claim 3 or 4, wherein the bent portion of the middle tread groove is spaced between the two bent portions of the middle tread groove that are connected to the first oblique sipe (71) and the third oblique sipe (73) of the same first siping pattern (7) on the first tread rib (1), the spaced bent portion of the middle tread groove is communicated with the first oblique sipe (71) on an adjacent second tread rib; further, a bent portion of the middle tread groove (5) is spaced between two adjacent first siping patterns (7) on the first tread rib (1), and a bent portion of the middle tread groove (5) is spaced between two adjacent first siping patterns (7) on the second tread rib (2); and
along the circumferential direction of the tire, a positional relationship of the first oblique sipe and the third oblique sipe of the same first siping pattern on the first tread rib (1) and the adjacent second tread rib (2) is opposite.

12. The tire according to claim 3, wherein along the circumferential direction of the tire, on a right side of the central tread groove, for the same first siping pattern on the first tread rib, the first oblique sipe is above the third oblique sipe; for the same first siping pattern on the adjacent second tread rib, the first oblique sipe is below the third oblique sipe;
the first oblique sipe (71) and the third oblique sipe (73) are disposed in parallel, and a length from a joint part between the first oblique sipe (71) and the middle tread groove to a joint part between the second oblique sipe (72) and the first oblique sipe (71) is greater than a length of the third oblique sipe (73);and
the fourth oblique sipe (81), the fifth oblique sipe (82), and the sixth oblique sipe (83) are disposed in parallel, and a length from a joint part between the fifth oblique sipe (82) and the edge tread groove (6) to a joint part between the fifth oblique sipe (82) and the seventh oblique sipe (84) is greater than a length of the fourth oblique sipe (81) and is also greater than a length of the sixth oblique sipe (83).

13. The tire according to claim 3, wherein the first oblique sipe (71), the second oblique sipe (72), and the third oblique sipe (73) are linear grooves having a bottom portion designed with a full rounded corner and a width ranging from 0.6 mm to 1 mm; the first oblique sipe and the second oblique sipe have a depth range of 2-4 mm, and the third oblique sipe has a depth range of 10-14 mm;
the fourth oblique sipe (81) and the sixth oblique sipe (83) have the same length; and
an included angle between the fourth/fifth/sixth oblique sipe and the transverse direction of the tire tread pattern is 15-20°, the fourth oblique sipe, the fifth oblique sipe, the sixth oblique sipe, the seventh oblique sipe, and the eighth oblique sipe are all linear grooves having a bottom portion designed with a full rounded corner, and a depth range of 1.5-2.5 mm.
